# DEMANDE DE BREVET EUROPEEN

(11) **EP 4 625 644 A2**
(43) Date de publication de la demande: **01.10.2025**
(21) Numéro de dépôt: 25166651.7
(22) Date de dépôt: 27.03.2025
(51) Int. Cl.: H01M 50/204, H01M 50/574

(54) **DISPOSITIF D'ISOLATION POUR UN COMPARTIMENT À PILE, COMPARTIMENT À PILE, APPAREIL ÉLECTRIQUE ET DISJONCTEUR ÉLECTRIQUE ASSOCIÉS**

(30) Priorité: 28.03.2024 FR 2403189
(71) Demandeur: SCHNEIDER ELECTRIC INDUSTRIES SAS, 92500 Rueil-Malmaison (FR)
(72) Inventeur: PRIEUR, Patrick, 38640 CLAIX (FR); CANCELA, Denis, 38450 ST GEORGES DE COMMIERS (FR)
(74) Mandataire: Lavoix

(57) **Abrégé**

Ce dispositif d'isolation (250) pour un compartiment à pile (200) comprend un ruban (260), qui s'étend selon un axe longitudinal (A260) et qui comprend une première portion d'isolation (261), qui est électriquement isolante, qui est continue le long de l'axe longitudinal (A260), et qui est configurée pour être intercalée entre un terminal de contact (214) et une borne d'une pile électrique (212) afin d'empêcher le passage du courant entre le terminal de contact et la borne. Le ruban comprend aussi une deuxième portion d'isolation (262) et une portion de conduction (263), qui est configurée pour ne pas empêcher le passage du courant entre la borne et le terminal de contact lorsque la portion de conduction (263) est intercalée entre le terminal de contact et la borne. La portion de conduction est intercalée, selon l'axe longitudinal, entre la première portion d'isolation (261) et la deuxième portion d'isolation (262).

## Description

La présente invention concerne un dispositif d'isolation pour un compartiment à pile, un compartiment à pile comprenant un tel dispositif d'isolation, un appareil électrique comprenant un tel compartiment à pile et un disjoncteur électrique comprenant un tel appareil électrique.

On s'intéresse ici aux appareils électriques ou électroniques qui sont munis d'un compartiment à pile, lequel est prévu pour recevoir au moins une pile servant au fonctionnement de l'appareil électrique, notamment lorsque l'appareil électronique n'est pas alimenté en énergie électrique par le réseau électrique.

La pile comprend deux bornes électriques, tandis que le compartiment à pile comprend deux terminaux de contact, qui sont chacun configurés pour être en appui sur une borne respective de la pile lorsque la pile est reçue dans le compartiment. La pile est généralement insérée dans le compartiment lors de la fabrication de l'appareil, de sorte que l'appareil est utilisable dès sa mise en service. Pour éviter que le déchargement de la pile avant la mise en service de l'appareil électrique, il est connu d'intercaler un dispositif d'isolation, notamment une languette réalisée en un matériau isolant, entre une des bornes de la pile et le terminal de contact correspondant. Le dispositif d'isolation comprend une portion de préhension, qui dépasse à l'extérieur du compartiment et/ou de l'appareil électrique. Lors de la mise en service de l'appareil électrique, l'utilisateur tire sur la portion de préhension pour dégager le dispositif d'isolation du compartiment à pile, mettant ainsi en contact le terminal de contact et la borne entre lesquels le dispositif d'isolation était précédemment intercalé.

Or dans certaines applications, il est préférable de vérifier l'état de la pile, notamment la charge de la pile, avant la mise en service de l'appareil électronique. Une telle situation se rencontre par exemple lorsque l'appareil électronique est stocké entre sa fabrication et sa mise en service. Il faut alors extraire la pile de son compartiment, vérifier la charge de la pile, puis replacer la pile dans son compartiment en remettant en place le dispositif d'isolation. Ces opérations sont peu pratiques et prennent du temps.

CN-105 118 951-A décrit, par exemple, un compartiment à pile comprenant un dispositif mécanique d'interruption du courant, avec une roue dentée et une crémaillère. Un tel dispositif est relativement complexe et encombrant.

C'est à ces problèmes qu'entend plus particulièrement remédier l'invention, en proposant un dispositif d'isolation qui permette de vérifier l'état de la pile sans avoir à extraire la pile du compartiment.

À cet effet, l'invention concerne un dispositif d'isolation pour un compartiment à pile, le dispositif d'isolation comprenant :
- un ruban, qui s'étend selon un axe longitudinal, le ruban présentant une largeur, mesurée orthogonalement à l'axe longitudinal, sensiblement constante, le ruban comprenant une première portion d'isolation, qui est électriquement isolante et qui est continue le long de l'axe longitudinal,
- une portion de préhension, qui est reliée au ruban et qui est prévue pour être saisie par un utilisateur, de manière à tirer sur le dispositif d'isolation,
- le ruban est configuré pour être intercalé entre un terminal de contact d'un compartiment à pile et une borne respective d'une pile reçue dans un volume interne du compartiment à pile, une position du ruban par rapport au compartiment à pile étant réglable, la première portion d'isolation étant configurée pour empêcher le passage du courant entre le terminal de contact et la borne lorsque la première portion d'isolation est intercalée entre le terminal de contact et la borne,
dans lequel :
- le ruban comprend, outre la première portion d'isolation, une deuxième portion d'isolation et une portion de conduction, la portion de conduction étant intercalée, selon l'axe longitudinal, entre la première portion d'isolation et la deuxième portion d'isolation,
- la deuxième portion d'isolation est électriquement isolante et est configurée pour empêcher le passage du courant entre le terminal de contact et la borne lorsque la deuxième portion d'isolation est intercalée entre le terminal de contact et la borne, le dispositif d'isolation étant dans une deuxième position d'isolation,
- la portion de conduction est configurée pour ne pas empêcher le passage du courant entre la borne et le terminal de contact lorsque la portion de conduction est intercalée entre le terminal de contact la borne, le dispositif d'isolation étant dans une position de conduction.

Grâce à l'invention, lorsque le ruban est intercalé entre le terminal de contact et la borne électrique associée, il est possible de déplacer le dispositif d'isolation entre les positions d'isolation et la position de conduction, sans retirer complètement le dispositif d'isolation, et ainsi il est possible de tester la pile sans avoir à l'extraire du compartiment. Une fois le test terminé, le dispositif d'isolation est remis dans l'une des positions d'isolation, de manière à éviter que la pile ne se décharge prématurément.

Selon des aspects avantageux mais non obligatoires de l'invention, une telle unité de contrôle peut incorporer une ou plusieurs des caractéristiques suivantes prises isolément ou selon toute combinaison techniquement admissible :
- La portion de conduction est une portion perforée.
- Le ruban comprend une extrémité captive, par laquelle le ruban est relié au reste du dispositif d'isolation, et une extrémité libre opposée à l'extrémité captive, alors que le ruban comprend, à l'extrémité libre, un premier témoin visuel, qui est configuré pour indiquer à l'utilisateur l'intégrité du dispositif d'isolation.
- La première portion d'isolation est agencée entre la portion de conduction et la portion de préhension,
   alors que le dispositif d'isolation comprend une portion intermédiaire, qui est intercalée entre la première portion d'isolation et la portion de préhension selon l'axe longitudinal,
   et que la portion intermédiaire est reliée à la première portion d'isolation par un raccord formant un épaulement, qui présente une largeur supérieure à une largeur du ruban, l'épaulement étant configuré pour former une butée contre le compartiment à pile lorsque le dispositif d'isolation est dans la première position d'isolation.

L'invention concerne aussi un compartiment à pile, qui comprend :
- une enveloppe, qui est réalisé en un matériau électriquement isolant et qui délimite un volume interne de réception d'une pile électrique,
- un terminal de contact, qui est reçu dans le volume interne et qui est configuré pour être en appui contre une borne respective de la pile lorsque la pile est reçue dans le volume interne,
- un exemplaire du dispositif d'isolation tel que décrit précédemment,
dans lequel :
- l'enveloppe comprend deux encoches, par lesquelles le volume interne débouche sur un côté externe de l'enveloppe, les deux encoches étant alignées selon un axe principal et étant configurées pour autoriser le passage du ruban dans le volume interne, le ruban étant inséré simultanément dans les deux encoches, dans une configuration insérée du ruban, le ruban en configuration insérée étant apte à coulisser dans les deux encoches parallèlement à l'axe principal de sorte qu'une position longitudinale du ruban par rapport à l'enveloppe est réglable,
- lorsque la pile est reçue dans le volume interne et que le ruban est en configuration insérée, le ruban est intercalé entre le terminal de contact et la borne correspondante de la pile,
- lorsque la pile est reçue dans le volume interne et que la première portion d'isolation est intercalée entre le terminal de contact et la borne correspondante, le passage du courant entre la borne et le terminal de contact est empêché, le dispositif d'isolation étant dans la première position d'isolation,
- lorsque la pile est reçue dans le volume interne et que la deuxième portion d'isolation est intercalée entre le terminal de contact et la borne correspondante, le passage du courant entre la borne et le terminal de contact est empêché, le dispositif d'isolation étant dans la deuxième position d'isolation,
- lorsque la pile est reçue dans le volume interne et que la portion de conduction est intercalée entre le terminal de contact et la borne, le passage du courant entre la borne et le terminal de contact n'est pas empêché, le dispositif d'isolation étant dans la position de conduction.

Avantageusement :
- Le ruban comprend au moins un indicateur visuel, qui est agencé le long du ruban de manière à indiquer à l'utilisateur lorsque le dispositif d'isolation est dans la position de conduction.
- Le au moins un indicateur visuel comprend deux indicateurs visuels, qui sont agencés de part et d'autre de la portion de conduction,
   alors que les deux indicateurs visuels sont conjointement visibles à l'extérieur de l'enveloppe lorsque le dispositif d'isolation est dans la position de conduction et que lorsque le dispositif d'isolation est dans l'une des positions parmi la première position d'isolation et la deuxième position d'isolation, un seul des deux indicateurs visuels est visible à l'extérieur de l'enveloppe, l'autre indicateur visuel étant situé à l'intérieur de l'enveloppe.
- Le au moins un indicateur visuel comprend deux indicateurs visuels, qui sont agencés d'un même côté de la portion de conduction,
   alors que, lorsque le dispositif d'isolation est dans la position de conduction, un seul indicateur visuel est visible à l'extérieur de l'enveloppe, l'autre indicateur visuel étant situé à l'intérieur de l'enveloppe,
   que les deux indicateurs visuels sont conjointement visibles à l'extérieur de l'enveloppe lorsque le dispositif d'isolation est dans la position d'isolation associée à la portion d'isolation située du côté opposé des deux indicateurs visuels par rapport à la portion de conduction
   et que, lorsque le dispositif d'isolation est dans l'une des positions parmi la première position d'isolation et la deuxième position d'isolation, un seul des deux indicateurs visuels est visible à l'extérieur de l'enveloppe, l'autre indicateur visuel étant situé à l'intérieur de l'enveloppe.
- Le au moins un indicateur visuel comprend deux indicateurs visuels, qui sont agencés d'un même côté de la portion de conduction,
   alors que, lorsque le dispositif d'isolation est dans la position de conduction, un seul indicateur visuel est visible à l'extérieur de l'enveloppe, l'autre indicateur visuel étant situé à l'intérieur de l'enveloppe,
   et que les deux indicateurs visuels sont conjointement visibles à l'extérieur de l'enveloppe lorsque le dispositif d'isolation est dans la position d'isolation associée à la portion d'isolation située du côté opposé des deux indicateurs visuels par rapport à la portion de conduction.

L'invention concerne aussi un appareil électrique, qui comprend :
- un boitier, qui est réalisé en un matériau isolant, et qui comprend un logement, le logement formant l'enveloppe du compartiment à pile tel que défini précédemment.

Alternativement, l'appareil électrique, comprend :
- le compartiment à pile tel que défini précédemment,
- un boitier, qui est distinct du compartiment à pile et qui ménage un logement de réception du compartiment à pile,
dans lequel, lorsque le compartiment à pile est reçu dans le logement :
- les encoches sont situées à l'intérieur du logement,
- la portion de préhension est située à l'extérieur du logement.

Avantageusement, l'appareil électrique est une unité de contrôle pour un disjoncteur électrique.

L'invention concerne aussi un disjoncteur électrique, qui comprend :
- une unité de coupure, comprenant au moins un dispositif de coupure et un actionneur, le dispositif de coupure étant déclenchable au moyen l'actionneur,
- un exemplaire de l'unité de contrôle telle que décrite précédemment,
dans lequel :
- l'unité de coupure ménage un réceptacle, qui débouche sur une face frontale de l'unité de coupure,
- l'unité de contrôle est reçue dans le réceptacle de l'unité de coupure, de sorte que la portion de préhension est accessible depuis la face frontale de l'unité de coupure.
- [Fig 1] la figure 1 représente respectivement, sur deux inserts a) et b), une vue en perspective et une vue en perspective partiellement éclatée d'un disjoncteur électrique conforme à l'invention, le disjoncteur électrique comprenant une unité de contrôle, elle aussi conforme à l'invention ;
- [Fig 2] la figure 2 est une vue en perspective de l'unité de contrôle de la figure 1, l'unité de contrôle comprenant un compartiment à pile et un dispositif d'isolation, eux-aussi conformes à l'invention ;
- [Fig 3] la figure 3 représente, sur deux inserts a) et b), une vue en perspective partiellement éclatée de l'unité de contrôle de la figure 2 et une vue en perspective du compartiment à pile et du dispositif d'isolation ;

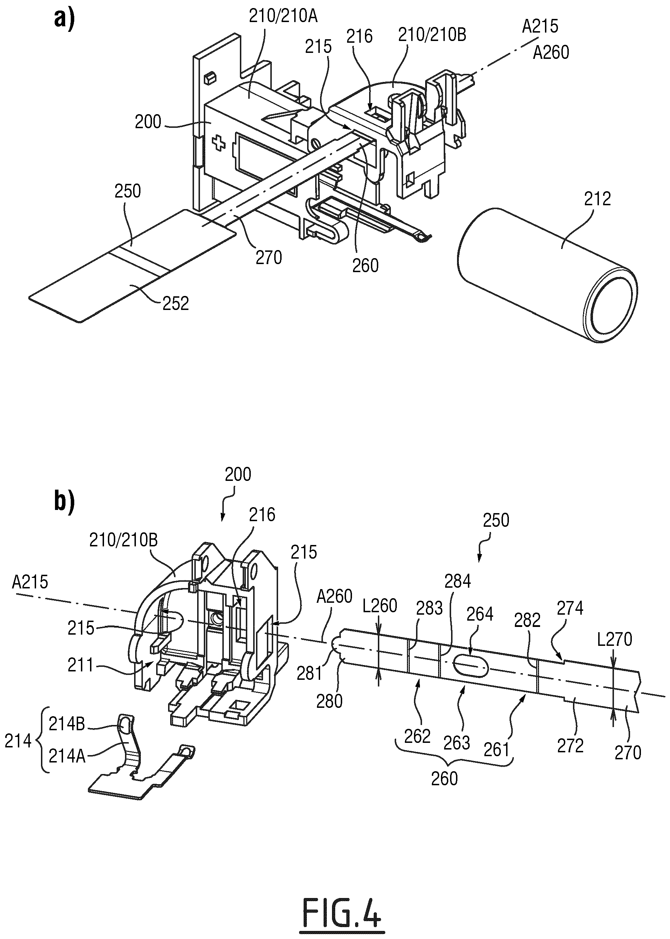

- [Fig 4] la figure 4 représente, sur deux inserts a) et b), une vue en perspective partiellement éclatée du compartiment à pile et du dispositif d'isolation dans deux configurations différentes ;
- [Fig 5] la figure 5 représente, sur deux inserts a) et b), une vue en perspective partiellement éclatée du compartiment à pile et du dispositif d'isolation dans une configuration dite d'isolation, certaines pièces étant cachées à l'insert b), et
- [Fig 6] la figure 6 représente, sur deux inserts a) et b), une vue en perspective partiellement éclatée du compartiment à pile et du dispositif d'isolation dans une configuration dite de conduction, certaines pièces étant cachées à l'insert b).

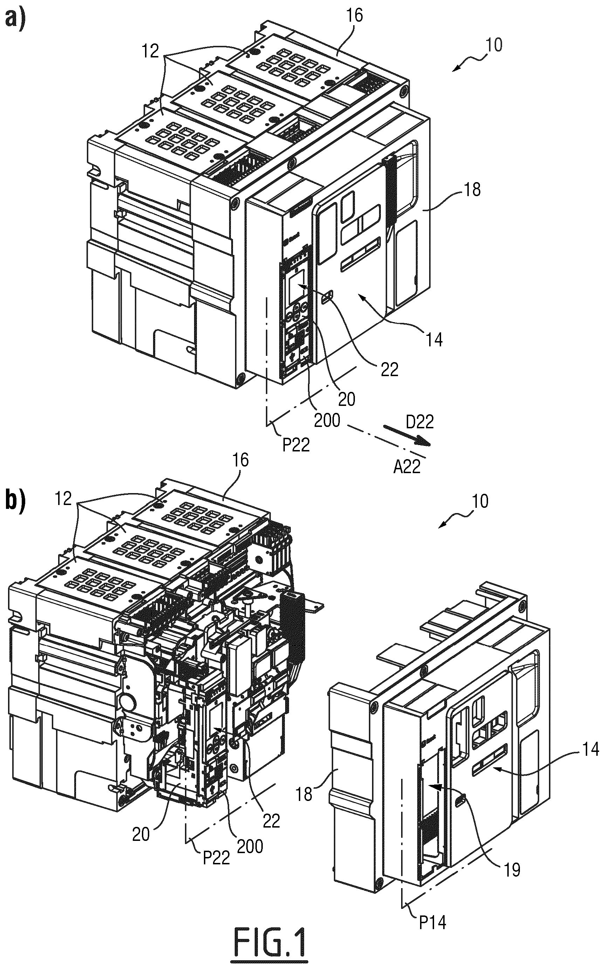

Un disjoncteur électrique 10 est représenté en figure 1. Le disjoncteur électrique 10, dit aussi simplement disjoncteur 10, est ici un disjoncteur multipolaire, en particulier un disjoncteur tripolaire. Le nombre de pôles du disjoncteur 10 n'est pas limitatif. De façon connue, un disjoncteur électrique multipolaire comporte, pour chaque pôle électrique, des terminaux de puissance d'entrée et de sortie, qui sont respectivement raccordés ou isolés électriquement l'un de l'autre par un dispositif de coupure du disjoncteur. Le dispositif de coupure comprend par exemple des contacts mobiles séparables, qui sont reçus dans une chambre de coupure du disjoncteur électrique 10 et qui dont les mouvements sont contrôlés par un actionneur. Ainsi, le dispositif de coupure est déclenchable au moyen de l'actionneur. Les chambres de coupures sont ici matérialisées par trois grilles 12 visibles sur une face supérieure du disjoncteur 10, les autres éléments du dispositif de coupure n'étant pas représentés.

Le disjoncteur électrique 10 est destiné à être utilisé au sein d'une installation électrique, par exemple pour contrôler l'alimentation d'une machine-outil. Dans une configuration normale d'utilisation, le disjoncteur électrique 10 est généralement placé au sein d'une armoire électrique, le disjoncteur électrique 10 présentant une face frontale 14, qui est orientée vers l'utilisateur se tenant devant l'armoire électrique. L'armoire électrique n'est pas représentée.

Le disjoncteur électrique 10 comprend une unité de coupure 16, qui comporte en particulier chacune des chambres de coupures, ainsi que le dispositif de coupure et l'actionneur associé. Le disjoncteur électrique 10 comprend avantageusement un plastron 18, qui est fixé de manière réversible sur l'unité de coupure 16. Le plastron 18 est réalisé en un matériau électriquement isolant et s'étend globalement selon un plan frontal P14, qui définit une portion de la face frontale 14 du disjoncteur électrique 10, et par extension de l'unité de coupure 16. Le plastron 18 sert ainsi à protéger l'utilisateur du disjoncteur 10. À la figure 1 a), le plastron 18 est représenté assemblé à l'unité de coupure 16, ce qui correspond à une configuration d'utilisation normale du disjoncteur 10. À la figure 1 b), le plastron 18 est éloigné de l'unité de coupure 16, cette configuration se retrouvant par exemple lors d'une maintenance de l'unité de coupure 16.

Le disjoncteur électrique 10 comprend aussi une unité de contrôle 20. L'unité de contrôle 20 est configurée pour analyser un ou plusieurs états de l'unité de coupure 16 et est configurée pour déclencher l'actionneur en fonction du ou des résultats de ces analyses, séparant ainsi les contacts séparables.

L'unité de contrôle 20 comprenant une face avant 22, La face avant 22 présente une forme globalement plane et est géométriquement portée par un plan avant P22, qui est orthogonal à un axe de profondeur A22 de l'unité de contrôle 20. La face avant 22 est orientée vers l'utilisateur lorsque l'unité de contrôle 20 est dans une configuration normale d'utilisation. La face avant 22 définit ainsi une direction avant D22, qui est parallèle à l'axe de profondeur A22. La direction avant D22 est représentée par une flèche. Les notions de directions telles que « avant », « arrière », « haut », « bas », etc., sont définies en relation aux éléments tels que représentés sur les dessins, sachant qu'il peut en être autrement dans la réalité.

Le plastron 18 comprend une fenêtre 19, par laquelle la face avant 22 de l'unité de coupure 20 est visible. La fenêtre 19 est préférentiellement obturée par un rabat transparent. Le rabat n'est pas représenté.

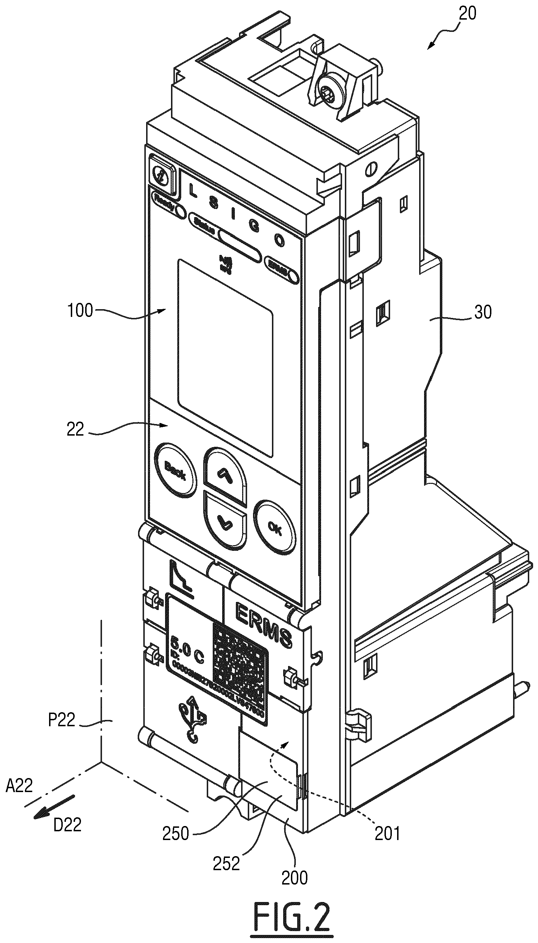

L'unité de contrôle 20 est assemblée à l'unité de coupure 16 de manière réversible. Dans l'exemple des figures 1a) et 1b), l'unité de contrôle 20 est représentée en configuration assemblée à l'unité de coupure 16. L'unité de contrôle 20 est représentée isolément à la figure 2.

L'unité de coupure 16 ménage un réceptacle, qui débouche sur une face frontale 14 de l'unité de coupure 16 et dans lequel est reçue l'unité de contrôle 20, de sorte que la face avant 22 de l'unité de contrôle 20 est sensiblement alignée avec la face frontale 14 de l'unité de coupure 16, comme notamment illustré à la figure 1 a). Le réceptacle n'est pas représenté.

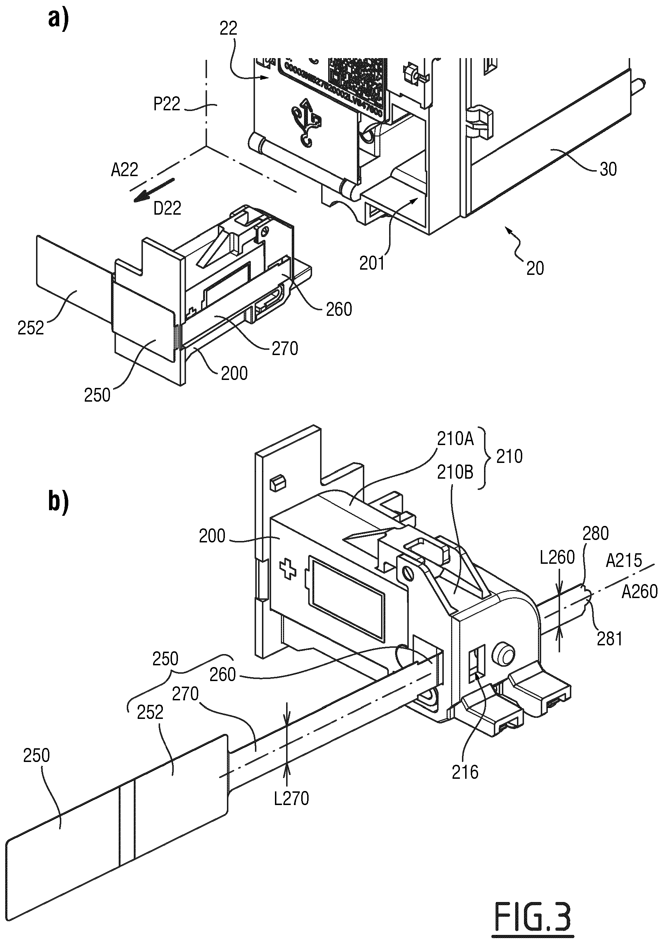

On décrit à présent l'unité de contrôle 20, en référence aux figures 2 et 3.

L'unité de contrôle 20 comprend un boitier 30, qui est réalisé en un matériau isolant et qui forme un volume de réception de divers composants de l'unité de contrôle 20. Dans l'exemple illustré, le boitier 30 loge une carte électronique. La carte électronique n'est pas représentée. Le boitier 30 inclut ici un sous-ensemble avant 100, qui forme une portion de la face avant 22.

L'unité de contrôle 20 comprend aussi un compartiment à pile 200, qui est reçu dans un logement 201. Le compartiment à pile 200 est configuré pour recevoir au moins une pile électrique. Dans l'exemple illustré, le compartiment à pile 200 reçoit une seule pile 212, ici une pile cylindrique. La pile 212 comprend deux bornes électriques, qui sont ici agencés sur des faces opposées de la pile 212. Le type de pile et le nombre de piles ne sont pas limitatifs pour la mise en œuvre de l'invention. Selon le type de pile, la pile 212 présente entre ses bornes une tension de quelques Volts, typiquement comprise entre 3 V et 24 V.

Le boitier 30 ménage un logement 201 de réception du compartiment à pile 200. Dans l'exemple de la figure 2, le compartiment à pile 200 est reçu dans le logement 201, le logement étant caché. À la figure 3 a), le compartiment à pile 200 est représenté à distance du logement 201.

L'unité de contrôle 20 comprend aussi un dispositif d'isolation 250. À la figure 2, seule une portion de préhension 252 du dispositif d'isolation 250 est visible, le reste du dispositif d'isolation 250 étant caché. Sur les figures 3 a) et b), le dispositif d'isolation 250 est représenté dans deux configurations différentes, respectivement une configuration repliée et une configuration déployée.

La portion de préhension 252 est prévue pour être saisie par un utilisateur, de manière à tirer sur le dispositif d'isolation 250 et à séparer le dispositif d'isolation 250 du compartiment à pile 200, comme expliqué plus loin.

La portion de préhension 252 présente ici une forme globalement rectangulaire. La portion de préhension 252 est située à l'extérieur du logement 201 lorsque le compartiment à pile 200 est reçu dans le logement 201. Avantageusement, lorsque l'unité de contrôle 20 est reçue dans le réceptacle de l'unité de coupure 16, la portion de préhension 252 est accessible depuis la face frontale 14 de l'unité de coupure 16.

Le dispositif d'isolation 250 est ici réalisé intégralement en un matériau électriquement isolant, de préférence un matériau polymère synthétique. Le dispositif d'isolation 250 est ici réalisé en polycarbonate - noté PC-.

Le dispositif d'isolation 250 est par exemple réalisé par découpage d'un film polymère, le film polymère présentant une épaisseur comprise entre 100 et 200 µm.

Le dispositif d'isolation 250 est suffisamment flexible pour évoluer entre plusieurs configurations, notamment les configurations repliées ou déployées. Le dispositif d'isolation 150 peut ainsi être plié ou déplié, de préférence à la main et sans outil. Dans le reste de la description, sauf mention spécifique on considère le dispositif d'isolation 250 dans la configuration déployée.

Le dispositif d'isolation 250 comprend, outre la portion de préhension 252, un ruban 260, qui présente une forme allongée et s'étend selon un axe longitudinal A260. Le ruban 260 présentant une largeur L260, mesurée orthogonalement à l'axe longitudinal A260, qui est sensiblement constante. La largeur L260 est ici égale à 5 mm.

Le ruban 260 comprenant trois portions, qui incluent une première portion d'isolation 261, une deuxième portion d'isolation 262 et une portion de conduction 263.

La première portion d'isolation 261 est électriquement isolante et est continue le long de l'axe longitudinal A260. Par « électriquement isolante », on entend que lorsque deux électrodes sont placées de part et d'autre de la première portion d'isolation 261, en appui contre le ruban, et qu'une tension continue inférieure ou égale à 24 Volts est appliquée entre ces deux électrodes, aucun courant électrique ne passe entre les deux électrodes.

La deuxième portion d'isolation 262 est électriquement isolante et est continue le long de l'axe longitudinal A260.

La portion de conduction 263 n'est pas électriquement isolante. Dans l'exemple illustré, la portion de conduction 263 est réalisé au moyen d'une perforation 264, qui est ménagée au travers du ruban 260. La perforation 264 est avantageusement située à cheval sur l'axe longitudinal A260. La portion de conduction 263 est ainsi une portion perforée du ruban 260.

En variante non représentée, un film conducteur est appliqué à la surface du ruban 260, sur les deux faces du ruban, pour former la portion de conduction 263. La portion de conduction 263 comprenant la perforation 264 est cependant préférée car plus simple et moins couteuse à mettre en œuvre.

La portion de conduction 263 est intercalée, selon l'axe longitudinal A260, entre la première portion d'isolation 261 et la deuxième portion d'isolation 262. Dans l'exemple illustré, la première portion d'isolation 161 est agencée entre la portion de conduction 263 et la portion de préhension 252.

Le dispositif d'isolation 250 comprend aussi une portion intermédiaire 270, qui est intercalée entre la première portion d'isolation 161 et la portion de préhension 252 selon l'axe longitudinal A260. Dans l'exemple illustré, la portion intermédiaire 270 présente une largeur L270, mesurée orthogonalement à l'axe longitudinal A260. La portion intermédiaire 270 est reliée à la première portion d'isolation 261 par un raccord 272 qui forme ainsi formant un épaulement 274, dont la largeur L270 est supérieure à la largeur L260 du ruban 260.

Le ruban 260 comprend une extrémité captive, par laquelle le ruban est relié au reste du dispositif d'isolation, et une extrémité libre 280 opposée à l'extrémité captive. Dans l'exemple illustré, le ruban 260 est relié à la portion intermédiaire 270 par l'intermédiaire de l'extrémité captive. Le ruban 260 comprend, à l'extrémité libre, un premier témoin visuel 281, qui est prévu pour confirmer à l'utilisateur l'intégrité du dispositif d'isolation 250. En particulier, le premier témoin visuel 281 est prévu pour confirmer que le dispositif d'isolation est intégralement retiré du compartiment à pile après que l'utilisateur ait tiré sur la portion de préhension 252, et qu'aucun morceau du dispositif d'isolation 250 ne reste dans le compartiment à pile 200 ou dans le logement 201 de l'unité de contrôle 20. Le premier témoin visuel 281 présente ici une forme de demi-cercle. Alternativement et/ou en complément, le premier témoin visuel 281 comprend une zone présentant un aspect visuel différent du reste du ruban 260. Par exemple, le premier témoin visuel 281 est rouge, tandis que le reste du ruban 260 est transparent.

On décrit à présent le compartiment à pile 200.

Le compartiment à pile 200 comprend une enveloppe 210, qui est réalisé en un matériau électriquement isolant et qui délimite un volume interne 211 de réception de la pile électrique 212. Le compartiment à pile 200 comprend aussi un terminal de contact 214, qui est reçu dans le volume interne 211 et qui est configuré pour être en appui contre une borne respective de la pile 212 lorsque la pile 212 est reçue dans le volume interne 211. Le terminal de contact 214 est ici une lame métallique 214A, qui présente une extrémité avec un renflement 214B, prévue pour être en appui contre la borne correspondante.

Dans l'exemple non limitatif illustré, l'enveloppe 210 est formée d'une première portion 210A refermée par un couvercle 210B, qui est monté pivotant sur la première portion 210B et qui est prévu pour maintenir la pile 211 dans le volume interne 211. D'autres agencements de l'enveloppe 210 sont bien entendu possibles, par exemple avec un couvercle vissé à la portion principale, voire une enveloppe 201 réalisée d'une seule pièce.

L'enveloppe 210 comprend deux encoches 215 et 215, par lesquelles le volume interne 211 débouche sur un côté externe de l'enveloppe 210, les deux encoches 215 étant alignées selon un axe principal A215. Lorsque la pile 212 est reçue dans le volume interne 211, on considère qu'une zone de contact entre le terminal de contact 214 et la borne correspondante est située à cheval sur l'axe principal A215.

Les encoches 215 sont configurées pour autoriser le passage du ruban 260 dans le volume interne 211, le ruban 260 étant inséré simultanément dans les deux encoches 215, dans une configuration insérée du ruban 260. En configuration insérée, l'axe longitudinal A260 est confondu avec l'axe principal A215. Le ruban 260 en configuration insérée est apte à coulisser dans les deux encoches 215 parallèlement à l'axe principal A215, de sorte qu'une position longitudinale du ruban 260 par rapport à l'enveloppe 210 est réglable.

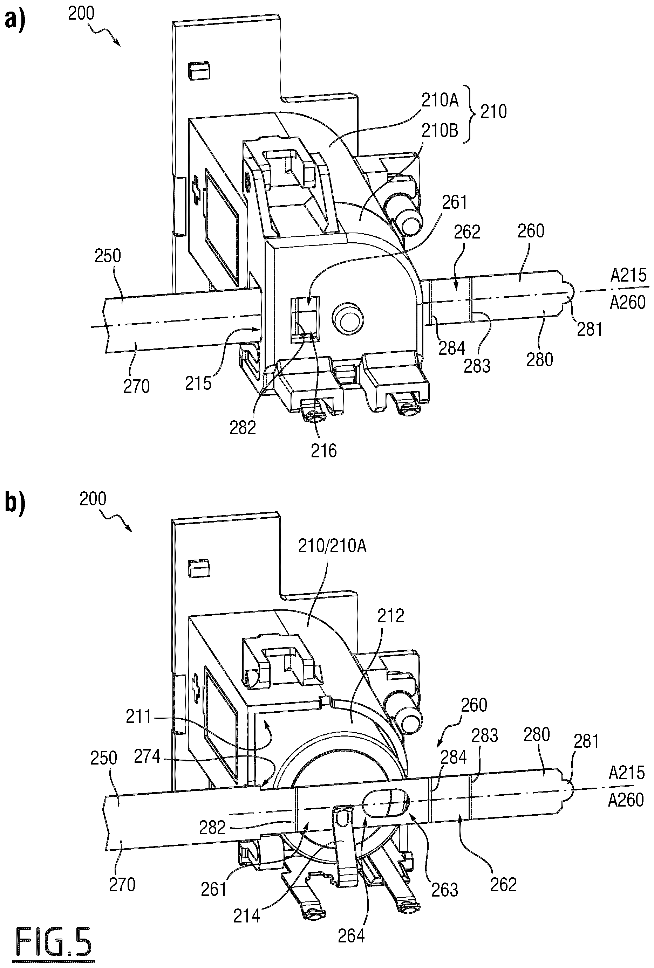

Lorsque la pile 212 est reçue dans le volume interne 211 et que la première portion d'isolation 261 est intercalée entre le terminal de contact 214 et la borne correspondante, le passage du courant entre la borne et le terminal de contact 214 est empêché, le dispositif d'isolation 250 étant dans une première position d'isolation par rapport à l'enveloppe 210. comme illustré à la figure 5.

Lorsque la pile 212 est reçue dans le volume interne 211 et que la deuxième portion d'isolation 262 est intercalée entre le terminal de contact 214 et la borne correspondante, le passage du courant entre la borne et le terminal de contact 214 est empêché, le dispositif d'isolation 250 étant dans une deuxième position d'isolation par rapport à l'enveloppe 210.

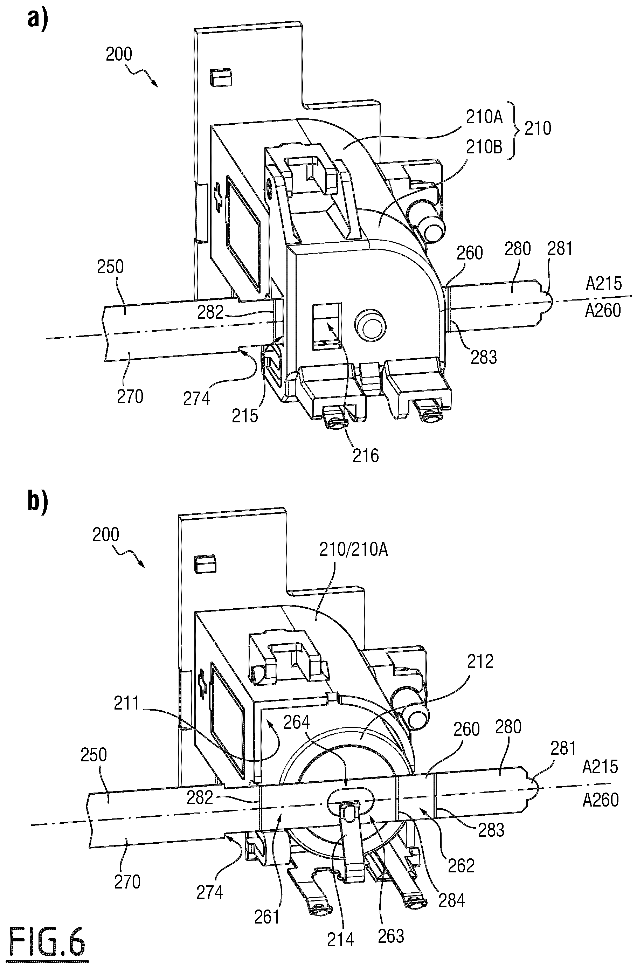

Lorsque la pile 212 est reçue dans le volume interne 211 et que la portion de conduction 263 est intercalée entre le terminal de contact 214 et la borne correspondante, le passage du courant entre la borne et le terminal de contact 214 n'est pas empêché, le dispositif d'isolation 250 étant dans une position de conduction par rapport à l'enveloppe 210, comme illustré à la figure 6.

On comprend que la position longitudinale du ruban 260 par rapport à l'enveloppe 210 en général, et par rapport au terminal de contact 214 en particulier, est réglable par l'utilisateur, notamment en tirant sur la portion de préhension 252 ou sur l'extrémité libre 280 du ruban 260. Lorsque l'utilisateur tire sur la portion de préhension 252, le ruban 260 se déplace par rapport à l'enveloppe 210 selon une direction de retrait, tandis que lorsque l'utilisateur tire sur l'extrémité libre 280, le ruban 260 se déplace par rapport à l'enveloppe 210 selon une direction d'insertion, qui est opposée à la direction de retrait.

Avantageusement, l'épaulement 274 est configuré pour former une butée contre l'enveloppe 210 lorsque le dispositif d'isolation 250 est dans la première position d'isolation. Autrement dit, l'épaulement 274 coopère avec l'enveloppe 210 de manière à limiter les déplacements du ruban selon la direction d'insertion. En corollaire, lorsque l'épaulement 274 est en butée contre l'enveloppe 210, l"utilisateur sait que le dispositif d'isolation 250 est dans la première position d'isolation.

Avantageusement, le ruban 260 comprend au moins un indicateur visuel, qui est agencé le long du ruban 260 de manière à indiquer à l'utilisateur lorsque le dispositif d'isolation 250 est dans la position de conduction. Le au moins un indicateur visuel comprend deux indicateurs visuels 282 et 283, qui sont agencés de part et d'autre de la portion de conduction 263, les deux indicateurs visuels 282 et 283 étant conjointement visibles à l'extérieur de l'enveloppe 210 lorsque le dispositif d'isolation 250 est dans la position de conduction, comme illustré a la figure 6 a). Ainsi l'utilisateur, voyant les deux indicateurs visuels 282 et 283 à l'extérieur de l'enveloppe 210, obtient la confirmation que la perforation 264 est alignée avec le terminal de contact 214. Dans l'exemple illustré, les deux indicateurs visuels 282 et 283 sont formés par des traits de couleur disposés sur le ruban 260, le reste du ruban 260 étant transparent. Alternativement, toute une zone comprise entre les deux indicateurs visuels 282 et 283 est colorée, le reste du ruban 260 étant transparent.

Avantageusement, l'enveloppe 210 comprend une ouverture 216, qui est agencée radialement à l'axe principal A215 et par laquelle le volume interne 211 débouche à l'extérieur de l'enveloppe 211, un des indicateurs visuels, ici l'indicateur visuel 282, étant visible au travers de l'ouverture 216 lorsque le dispositif d'isolation est dans l'une des positions d'isolation, ici la première position d'isolation, comme illustré à la figure 5 a).

Avantageusement, le ruban 260 comprend, outre l'indicateur visuel 283 situé entre la portion de conduction 263 et l'extrémité libre 280, un autre indicateur visuel 284, qui est intercalé entre l'indicateur visuel 283 et la portion de conduction 263. Autrement dit, le ruban 260 comprend deux indicateurs visuels qui sont situés d'un même côté de la portion de conduction 263 selon l'axe longitudinal A260. Les deux indicateurs visuels 283 / 284 sont ici situés entre la portion de conduction 263 et l'extrémité libre 280, c'est-à-dire du côté de la deuxième portion d'isolation 262.

Lorsque le dispositif d'isolation 250 est dans la première position d'isolation, les deux indicateurs visuels 283 et 284 sont visibles à l'extérieur de l'enveloppe 210, comme représenté à la figure 5. Lorsque le dispositif d'isolation 250 est dans la première position de conduction, comme représenté à la figure 6, un seul des deux indicateurs visuels - ici l'indicateur 283 - est visible à l'extérieur de l'enveloppe 210, l'autre indicateur visuel - ici l'indicateur visuel 284 - étant caché à l'intérieur de l'enveloppe 210. Chaque indicateur visuel 283 ou 284 est ainsi respectivement associé à une position parmi la position de conduction et la première position d'isolation.

En variante non représentée, une disposition miroir est bien entendu possible, c'est-à-dire que le ruban comprend, outre l'indicateur visuel 282 situé entre la portion de conduction 263 et la portion de préhension 252, un autre indicateur visuel, qui est intercalé entre la portion de conduction 263 et l'indicateur visuel 282. Lorsque le dispositif d'isolation 250 est dans la deuxième position d'isolation, les deux indicateurs visuels sont visibles à l'extérieur de l'enveloppe 210. Lorsque le dispositif d'isolation 250 est dans la position de conduction, un seul des deux indicateurs visuels - ici l'indicateur visuel 282 - est visible à l'extérieur de l'enveloppe 210, l'autre indicateur visuel étant caché à l'intérieur de l'enveloppe 210.

Plus généralement, le dispositif d'isolation 250 comprend deux indicateurs visuels, qui sont agencés d'un même côté de la portion de conduction 263. Lorsque le dispositif d'isolation 250 est dans la position de conduction, un seul indicateur visuel 283 est visible à l'extérieur de l'enveloppe 210, l'autre indicateur visuel 284 étant situé à l'intérieur de l'enveloppe. Les deux indicateurs visuels 283, 284 sont conjointement visibles à l'extérieur de l'enveloppe 210 lorsque le dispositif d'isolation 250 est dans la position d'isolation associée à la portion d'isolation située du côté opposé des deux indicateurs visuels par rapport à la portion de conduction 263.

Dans l'exemple illustré, les deux indicateur visuels 283 et 284 sont des bandes colorées. En variante non représentée mais néanmoins avantageuse, les deux indicateurs visuels sont deux flèches, qui sont alignées sur l'axe longitudinal A260 et qui sont orientées vers la portion de conduction 263. Lorsque le dispositif d'isolation 250 est dans l'une des positions parmi la position de conduction et la première position d'isolation, une pointe de la flèche correspondante est sensiblement alignée sur l'encoche 215 la plus proche.

Dans l'exemple illustré, l"unité de contrôle 20 est un exemple d'appareil électrique, qui ménage le logement de réception du compartiment à pile est reçu dans le logement. Bien entendu, les principes de l'invention sont transposables à d'autres types d'appareils électriques que

Dans l'exemple illustré, le compartiment à pile est distinct du boitier de l'appareil électrique, ici l'unité de contrôle 20. En variante non représentée, le compartiment à pile est formé par un enfoncement ménagé directement dans le boitier de l'appareil électrique.

Les modes de réalisation et les variantes mentionnées ci-dessus peuvent être combinés entre eux pour générer de nouveaux modes de réalisation de l'invention.

## Revendications

1. Dispositif d'isolation (250) pour un compartiment à pile (200), le dispositif d'isolation (250) comprenant :
- un ruban (260), qui s'étend selon un axe longitudinal (A260), le ruban (260) présentant une largeur (L260), mesurée orthogonalement à l'axe longitudinal (A260), sensiblement constante, le ruban (260) comprenant une première portion d'isolation (261), qui est électriquement isolante et qui est continue le long de l'axe longitudinal (A260),
- une portion de préhension (252), qui est reliée au ruban (260) et qui est prévue pour être saisie par un utilisateur, de manière à tirer sur le dispositif d'isolation (250),
- le ruban (260) est configuré pour être intercalé entre un terminal de contact (214) d'un compartiment à pile (200) et une borne respective d'une pile (212) reçue dans un volume interne (211) du compartiment à pile (200), une position du ruban (260) par rapport au compartiment à pile (200) étant réglable, la première portion d'isolation (261) étant configurée pour empêcher le passage du courant entre le terminal de contact (214) et la borne lorsque la première portion d'isolation (261) est intercalée entre le terminal de contact (214) et la borne,
dans lequel :
- le ruban (260) comprend, outre la première portion d'isolation (261), une deuxième portion d'isolation (262) et une portion de conduction (263), la portion de conduction (263) étant intercalée, selon l'axe longitudinal (A260), entre la première portion d'isolation (261) et la deuxième portion d'isolation (262),
- la deuxième portion d'isolation (262) est électriquement isolante et est configurée pour empêcher le passage du courant entre le terminal de contact (214) et la borne lorsque la deuxième portion d'isolation (262) est intercalée entre le terminal de contact (214) et la borne, le dispositif d'isolation (250) étant dans une deuxième position d'isolation,
- la portion de conduction (263) est configurée pour ne pas empêcher le passage du courant entre la borne et le terminal de contact (214) lorsque la portion de conduction (263) est intercalée entre le terminal de contact (214) et la borne, le dispositif d'isolation (250) étant dans une position de conduction.

2. Dispositif d'isolation (250) selon la revendication 1, dans lequel :
- la portion de conduction (263) est une portion perforée.

3. Dispositif d'isolation (250) selon l'une quelconque des revendications 1 ou 2, dans lequel :
- le ruban (260) comprend une extrémité captive, par laquelle le ruban (260) est relié au reste du dispositif d'isolation (250), et une extrémité libre (280) opposée à l'extrémité captive,
- le ruban (260) comprend, à l'extrémité libre (280), un premier témoin visuel (281), qui est configuré pour indiquer à l'utilisateur l'intégrité du dispositif d'isolation (250).

4. Dispositif d'isolation (250) selon l'une quelconque des revendications 1 à 3, dans lequel :
- la première portion d'isolation (261) est agencée entre la portion de conduction (263) et la portion de préhension (252),
- le dispositif d'isolation (250) comprend une portion intermédiaire (270), qui est intercalée entre la première portion d'isolation (261) et la portion de préhension (252) selon l'axe longitudinal (A260),
- la portion intermédiaire (270) est reliée à la première portion d'isolation (261) par un raccord (272) formant un épaulement (274), qui présente une largeur (L270) supérieure à une largeur (L260) du ruban (260), l'épaulement (274) étant configuré pour former une butée contre le compartiment à pile (200) lorsque le dispositif d'isolation (250) est dans la première position d'isolation.

5. Compartiment à pile (200), comprenant:
- une enveloppe (210), qui est réalisé en un matériau électriquement isolant et qui délimite un volume interne (211) de réception d'une pile (212) électrique,
- un terminal de contact (214), qui est reçu dans le volume interne (211) et qui est configuré pour être en appui contre une borne respective de la pile (212) lorsque la pile (212) est reçue dans le volume interne (211),
- un exemplaire du dispositif d'isolation (250) selon l'une quelconque des revendications 1 à 4,
dans lequel :
- l'enveloppe (210) comprend deux encoches (215), par lesquelles le volume interne (211) débouche sur un côté externe de l'enveloppe (210), les deux encoches (215) étant alignées selon un axe principal (A215) et étant configurées pour autoriser le passage du ruban (260) dans le volume interne (211), le ruban (260) étant inséré simultanément dans les deux encoches (215), dans une configuration insérée du ruban (260), le ruban (260) en configuration insérée étant apte à coulisser dans les deux encoches (215) parallèlement à l'axe principal (A215) de sorte qu'une position longitudinale du ruban (260) par rapport à l'enveloppe (210) est réglable,
- lorsque la pile (212) est reçue dans le volume interne (211) et que le ruban (260) est en configuration insérée, le ruban (260) est intercalé entre le terminal de contact (214) et la borne correspondante de la pile (212),
- lorsque la pile (212) est reçue dans le volume interne (211) et que la première portion d'isolation (261) est intercalée entre le terminal de contact (214) et la borne correspondante, le passage du courant entre la borne et le terminal de contact (214) est empêché, le dispositif d'isolation (250) étant dans la première position d'isolation,
- lorsque la pile (212) est reçue dans le volume interne (211) et que la deuxième portion d'isolation (262) est intercalée entre le terminal de contact (214) et la borne correspondante, le passage du courant entre la borne et le terminal de contact (214) est empêché, le dispositif d'isolation (250) étant dans la deuxième position d'isolation,
- lorsque la pile (212) est reçue dans le volume interne (211) et que la portion de conduction (263) est intercalée entre le terminal de contact (214) et la borne, le passage du courant entre la borne et le terminal de contact (214) n'est pas empêché, le dispositif d'isolation (250) étant dans la position de conduction.

6. Compartiment à pile (200) selon la revendication 5, dans lequel :
- le ruban (260) comprend au moins un indicateur visuel (282, 283), qui est agencé le long du ruban (260) de manière à indiquer à l'utilisateur lorsque le dispositif d'isolation (250) est dans la position de conduction.

7. Compartiment à pile (200) selon la revendication 6, dans lequel :
- le au moins un indicateur visuel comprend deux indicateurs visuels (282, 283), qui sont agencés de part et d'autre de la portion de conduction (263),
- les deux indicateurs visuels (282, 283) sont conjointement visibles à l'extérieur de l'enveloppe (210) lorsque le dispositif d'isolation (250) est dans la position de conduction,
- lorsque le dispositif d'isolation (250) est dans l'une des positions parmi la première position d'isolation et la deuxième position d'isolation, un seul des deux indicateurs visuels (283) est visible à l'extérieur de l'enveloppe (210), l'autre indicateur visuel (282) étant situé à l'intérieur de l'enveloppe (210).

8. Compartiment à pile (200) selon l'une quelconque des revendications 6 ou 7, dans lequel :
- le au moins un indicateur visuel comprend deux indicateurs visuels (283, 284), qui sont agencés d'un même côté de la portion de conduction (263),
- lorsque le dispositif d'isolation (250) est dans la position de conduction, un seul indicateur visuel (283) est visible à l'extérieur de l'enveloppe (210), l'autre indicateur visuel (284) étant situé à l'intérieur de l'enveloppe,
- les deux indicateurs visuels (283, 284) sont conjointement visibles à l'extérieur de l'enveloppe (210) lorsque le dispositif d'isolation (250) est dans la position d'isolation associée à la portion d'isolation située du côté opposé des deux indicateurs visuels par rapport à la portion de conduction (263).

9. Appareil électrique (20), comprenant :
- un boitier (30), qui est réalisé en un matériau isolant, et qui comprend un logement (201), le logement formant l'enveloppe (210) du compartiment à pile (200) selon l'une quelconque des revendications 5 à 8.

10. Appareil électrique (20), comprenant :
- le compartiment à pile (200) selon l'une quelconque des revendications 5 à 8,
- un boitier (30), qui est distinct du compartiment à pile (200) et qui ménage un logement (201) de réception du compartiment à pile (200),
dans lequel, lorsque le compartiment à pile (200) est reçu dans le logement (201) :
- les encoches (215) sont situées à l'intérieur du logement (201),
- la portion de préhension (252) est située à l'extérieur du logement (201).

11. Appareil électrique (20) selon la revendication 10, dans lequel :
- l'appareil électrique est une unité de contrôle pour un disjoncteur électrique (10).

12. Disjoncteur électrique (10), comprenant :
- une unité de coupure (16), comprenant au moins un dispositif de coupure et un actionneur, le dispositif de coupure étant déclenchable au moyen l'actionneur,
- un exemplaire de l'unité de contrôle (20) selon la revendication 11,
dans lequel :
- l'unité de coupure (16) ménage un réceptacle, qui débouche sur une face frontale (14) de l'unité de coupure (16),
- l'unité de contrôle (20) est reçue dans le réceptacle de l'unité de coupure (16), de sorte que la portion de préhension (252) est accessible depuis la face frontale (14) de l'unité de coupure (16).
